# EUROPÄISCHE PATENTSCHRIFT

(11) **EP 1 135 287 B1**
(45) Veröffentlichungstag und Bekanntmachung des Hinweises auf die Patenterteilung: **14.05.2003**
(21) Anmeldenummer: 99962121.2
(22) Anmeldetag: 28.11.1999
(51) Int. Cl.: B61D 3/16, B60P 3/00

(54) **SCHIENEN-NIEDERFLURWAGEN FÜR GLASGESTELLE**
LOW-PLATFORM RAILWAY CAR FOR GLASS STANDS
WAGON A PLATE-FORME SURBAISSEE

(30) Priorität: 03.12.1998 DE 19855733
(43) Veröffentlichungstag der Anmeldung: 26.09.2001
(73) Patentinhaber: Fahrzeugwerk Orthaus GmbH & Co. KG, 48683 Ahaus (DE); Spedition Hubert Winnen GmbH & Co. KG, 45964 Gladbeck (DE); Nijman/Zeetank Internationale Transporten B.V., 3208 KH Spijkenisse (NL)
(72) Erfinder: EXNOWSKI, Jürgen, D-58239 Schwerte (DE); KAPTEINA, Karl-Heinz, D-48683 Ahaus-Wüllen (DE); WELSCH, Friedrich, D-45964 Gladbeck (DE); VAN NOORDT, Kees, NL-3233 LX Osstvoorne (NL)
(74) Vertreter: Schulte, Jörg, Dipl.-Ing.
(86) Internationale Anmeldenummer: DE9903860
(87) Internationale Veröffentlichungsnummer: WO00032457

(56) Entgegenhaltungen:
- EP-A- 0 461 448
- EP-A- 0 463 505
- EP-A- 0 548 037
- EP-A- 0 672 566
- EP-A- 0 924 130
- DE-A- 3 516 914
- US-A- 3 235 285
- US-A- 4 248 472
- US-A- 5 511 491

## Beschreibung

Die Erfindung betrifft ein Transportfahrzeug in Form eines Niederflurwagens für den Transport von schweren und große Abmessungen aufweisenden Gegenständen wie Glasgestellen mit einer dem Schienenmaß angepassten breiten und durch den Einsatz von im Abstand zueinander angeordneten, niedrig bauenden Lenkgestellen auch langen Ladefläche, die beidseitig durch ein Ladebord begrenzt und kopfseitig mit einer Laderampe verbindbar ausgebildet ist, wobei die Ladefläche gegen Verschmutzung von unten und rundum mit einem Aufbau abgedichtet ist und ein Dach aufweist, das das Beladen erleichternd in seiner Lage veränderbar ist.

Die Erfindung betrifft auch ein Transportfahrzeug in Form eines Tiefladers für den Transport von schweren und große Abmessungen aufweisenden Gegenständen wie Glasgestellen mit einer den Straßenverkehrsvorschriften angepassten, breiten und durch den Einsatz von im Abstand angeordneten, niedrig bauenden Radsätzen auch langen Ladefläche, die beidseitig durch ein Ladebord begrenzt und heckseitig mit einer Laderampe verbindbar ausgebildet ist, wobei die Ladefläche gegen Verschmutzung rundum zusammen mit einem Aufbau abgedichtet ist und ein Dach aufweist.

Bei den zunächst genannten Transportfahrzeugen handelt es sich vorzugsweise um Eisenbahnwagons, die Glasscheibenpakete mit einer Länge von mehr als sechs Metern und einer Höhe von mehr als drei Metern zu transportieren haben. Diese Glasscheibenpakete werden an ein A-förmiges oder L-förmiges Glasgestell schrägstehend angeordnet und dann von dem entsprechend ausgebildeten Transportfahrzeug übernommen. Bei Lastkraftwagen ist es üblich, den Glasgestellen bodenseitig U-förmige Längsträger zuzuordnen, die mit entsprechenden Längstragelementen des Lastkraftwagens korrespondierend geformt sind, sodass sie bei bzw. nach Absenken des Heckteils des Lastkraftwagens von diesem durch Einschieben aufgenommen werden können. Zum Anheben und Absenken dienen Luftbälge, die mit den Rädern korrespondieren, um so den Heckteil des Lastkraftwagens gegenüber den Rändern absenken und anheben zu können. An den entsprechenden Rahmenlängsträgern sind Fixiereinrichtungen bzw. Ladungssicherungseinrichtungen angebracht, um so die vom Lastkraftwagen aufgenommenen Glasgestelle bzw. die darauf abgestellten Glasscheibenpakete abzustützen. Entsprechende Ausbildungen sind aus der DE-OS 35 16 914.1 bekannt, wobei hier ein Parallelogrammgestänge eingesetzt wird, das über einen Hydraulikzylinder verschwenkt wird. Nachteilig bei diesen bekannten Lastkraftwagen ist, dass es sich um Straßenfahrzeuge handelt, die dementsprechend die Umwelt belasten können. Darüber hinaus sind praktisch nur für den Transport derartiger Glasgestelle geeignete an Sattelzugmaschinen angehängte Innenlader zu verwenden. Derartige Innenlader können wie gesagt nur bedingt für andere Transporte oder überhaupt nicht für andere Transporte eingesetzt werden. Im Rahmen der allgemeinen Bemühungen, möglichst viele Transporte auf die Schiene zu verlegen, sind Niederflurwagen entwickelt worden, die beispielsweise auch von Lastkraftwagen befahren werden können. Diese Lastkraftwagen können mit den verschiedensten Gütern beladen sein, so theoretisch auch Sattelzugmaschinen mit angehängten Innenladern. Sollen aber derartige Niederflurwagen direkt mit den Glasgestellen beschickt bzw. beladen werden, so ist es zwangsweise notwendig, diese Glasgestelle mit Hilfe von Krananlagen auf die Eisenbahnwagons zu laden und sie dann zu transportieren, wobei derartige Glasgestelle beim Transport, d. h. beim Fahren der Zugeinheit verrutschen und aus der Richtung gelangen können, sodass sie stark gefährdet sind. Problematisch ist dabei insbesondere, dass hier lediglich A-förmige Glasgestelle zum Einsatz kommen können, um ein Verrutschen und ein ungleichmäßiges Beladen der Niederflurwagen zu vermeiden. L-förmige Glasgestelle, die naturgemäß eine ungleichmäßige Beladung eines Wagons ergeben, können nicht zum Einsatz kommen, obwohl die Glasindustrie immer mehr derartiger L-förmiger Glasgestelle einsetzt. Wie schon erwähnt ist aber besonders nachteilig, dass zur Beladung immer eine Krananlage benötigt wird, die vielleicht noch bei der Glashütte zur Verfügung steht, meistens aber nicht bei den Abnehmern derartiger Glasscheiben. Die EP-0548037-A1 zeigt einen Eisenbahnwagen mit rundum geschlossenem Aufbau. Über eine Rollenkonstruktion ist ein Abheben und Absenken des Faltenbalges möglich. Nachteilig ist, dass ein Durchfahren des Bereiches zwischen zwei Wagons erschwert, für ein Glasscheiben transportierendes Fahrzeug gar unmöglich ist. Dies gilt auch für den Fahrzeugverbund nach der US-PS 5,511,491. In der EP-0 463 505 A1 ist zwar gelehrt, dass Dach anhebbar auszubilden, allerdings Eisenbahnwagons, mit denen Personenkraftwagen in zwei Ebenen transportiert werden sollen. Ist die obere Ebene besetzt, kann das Dach wieder abgesenkt werden. Eine Sicherung der Ladung - d.h. der Pkw ist nicht vorgesehen. Die EP 0 672 566 A1 dagegen zeigt einen Niederflurwagen für den Transport von Lkw. Die 'Dachkonstruktion kann sich beim Befahren und Beladen erweitern, um so den Beladevorgang, insbesondere das Auffahren auf den Wagon zu erleichtern. Große Abmessungen aufweisende Gegenstände, vor allem Glasgestelle können nicht transportiert werden, insbesondere können Spezialfahrzeuge nicht Glasgestelle absetzen und aufnehmen. Auch die Lösungen nach den US-PS 3 235 285 und 4 248 472 sowie der EP 0 461 448 A1 zeigen nur Details bezüglich anhebbarer Dächer. Das Schienenfahrzeug nach der EP 0 924 130 A2 (Veröffentlichungsdatum 23.06. 1999) erfordert eine gesonderte Krananlage, um das Gestell mit den Glasplatten auf die Ladefläche zu bringen. Damit sind erheblich Probleme und Nachteile verbunden.

Die gleichen großen Probleme und Nachteile treten auf, wenn derart große und schwere Glasgestelle auf Tieflader gemäß US-PS 3 235 285 oder US-PS 4 248 472 verladen werden sollen. Die Fahrzeuge gemäß der beiden US-PS 3 235 285 und 4 248 472 verfügen über eine entsprechend große und lange Ladefläche. Um sie mit schweren und großen Glasgestellen zu beladen fehlen die notwendigen Systeme. Es ist nur die Ladefläche vorhanden auf der kleine Glasgestelle ohne Sicherung abgestellt werden können. Selbst diese kleinen Glasgestelle müssen durch das geöffnete Dach gehoben werden, was entsprechend große Kräne voraussetzt. Stehen sie dann auf der Ladefläche, können sie allenfalls unzulänglich über Balken, Verspannungen u. Ä. abgesichert werden. Bei großen und schweren Glasgestellen - wie sie heute üblich sind - reichen solche Balken nicht, um die großen Gewichte zu beherrschen. Solche Fahrzeuge sind daher für den Transport solch großer und mehr als 20 t wiegenden, beladenen Glasgestelle nicht zugelassen.

Der Erfindung liegt daher die Aufgabe zugrunde, ein Transportfahrzeug bereitzustellen, bei dem schwere und große Lasten einfach beladen und sicher befestigt werden können.

Die Aufgabe wird gemäß der Erfindung durch die Merkmale des Anspruches 1 gelöst.

Aufgrund dieser besonderen Ausbildung des Transportfahrzeuges ist es möglich, die gesamte Ladefläche zu befahren, die einzelnen Glasgestelle, gleich ob es sich um A- oder L-förmige Glasgestelle handelt, auf dieser Ladefläche abzusetzen und dort so zu sichern, dass einmal die Gestelle und zum andern auch die Ladung, d. h. die Glasscheiben während des Transportes gesichert sind. Dabei kann es sich sowohl um die sogenannten Niederflurwagen, wie auch um Tieflader handeln, die mit entsprechend geeigneten Fahrzeugen, hier also Osila-Glastransportfahrzeugen zu befahren sind, um darauf die Glasgestelle wie beschrieben abzusetzen und sie dann abzusichern. Besonders vorteilhaft ist, dass sowohl während der Beladung wie auch bei der Entladung auf Krananlagen völlig verzichtet werden kann, wobei die Osila-Glastransportfahrzeuge als Spezialfahrzeuge auf den Glashütten sowieso zur Verfügung stehen, weil sie dort für den innerbetrieblichen Verkehr benötigt werden. Sie können aber auch problemlos beim Abnehmer zum Einsatz kommen, weil sie auch dort in aller Regel zur Verfügung stehen, wobei rein vorsichtshalber beispielsweise einem Großtransport mit mehreren derartigen Niederflurwagen ein entsprechendes Osila-Glastransportfahrzeug zugeordnet werden kann, das also die gesamte Fahrt mitmacht und an den jeweiligen Endpunkten für die Entladung der Glasgestelle Sorge trägt. Damit ist ein sehr vielseitiges Verfahren bzw. ein Transportfahrzeug geschaffen, das egal ob es sich um ein Schienenfahrzeug oder aber um ein Straßenfahrzeug handelt, für den entsprechenden Einsatz Verwendung findet, ohne dass es dafür aufwendiger Krananlagen und ähnlicher Einrichtungen bedarf. Über die in Längsrichtung verlaufenden Verstärkungsbohlen wird eine Überlastung der eigentlichen Ladefläche sicher ausgeschlossen bzw. es entfällt die Notwendigkeit, die gesamte Ladefläche entsprechend stabil zu gestalten, was die Zuladung von Gütern erschweren würde. Diese Verstärkungsbohlen sind darüber hinaus auch gleichzeitig so auszubilden, dass ein Rutschen der Glasgestelle auf ihnen und ein Rutschen der Glasgestelle mit den Verstärkungsbohlen auf der Ladefläche erschwert bzw. unmöglich ist. Ein Beladen mit den gängigen Osila-Glastransport-Fahrzeugen mit dem überhöhten Führerhaus ist vorteilhaft möglich, weil der sich auf der Ladefläche abstützende Aufbau mit einem anhebbar ausgebildeten Dach ausgerüstet ist. Während des Beladens der Ladefläche wird das Dach dementsprechend angehoben, sodass die Osila-Glastransportfahrzeuge problemlos die Glasgestelle über die Ladefläche verfahren und dort absetzen können. Ist der Ladevorgang abgeschlossen, wird das Dach wieder abgesenkt und man hat einen vorteilhaft ausgebildeten Gesamtniederflurwagen oder Tieflader. Die Seitenwände sind stabilisiert und so mit der Ladefläche verbunden bzw. mit dem Ladebord verbunden, dass sie als Widerlager für die Ladungssicherungseinrichtung geeignet sind. Dabei können die Seitenwände beispielsweise in entsprechende Rungen des Ladebords eingesteckt oder auf andere Art und Weise damit verbunden sein, um so die notwendigen Kräfte zu übertragen. Denkbar ist es auch, dass die Seitenwände stabilisierende Ständer vorgesehen sind, die sich an den Querträgern der Ladefläche abstützen, wobei diese die Widerlager für die eigentliche Ladungssicherungseinrichtung bilden.

Eine besonders vorteilhafte, weil wenig platzaufwendige Ausbildung eines solchen Widerlagers ist die, bei dem die Seitenwände, das Dach und die Ladefläche bezüglich des notwendigen Widerlagers für die Ladungssicherungseinrichtungen eine Einheit bildend miteinander gekoppelt sind. Die Seitenwände, das Dach und die Ladefläche bilden praktisch Ringe, an denen sich die Ladungssicherungseinrichtungen abstützen können, wenn sie gegen die Glaspakete verfahren sind, um diese während des Transportes wirksam zu sichern.

Eine weitere zweckmäßige Ausbildung ist die, bei der die Gestellfixiereinrichtungen als am unteren Ladebord schwenkbar angeordneter Luft- oder Hydraulikzylinder ausgebildet sind,der an einem U-förmmigen Längsträger des Glasgestells abstützbar ausgeführt ist. Diese Gestellfixiereinrichtungen verhindern ein Hin- und Herrutschen der Glasgestelle auf der Ladefläche, wobei sie sich vorteilhaft für den innerbetrieblichen Transport und auch den Transport mit den Innenladern geeigneten U-förmigen Längsträger der Glasgestelle zu Nutze machen. Darüber hinaus können diese Gestellfixiereinrichtungen sich auch am Ladebord zweckmäßig abstützen bzw. an diesem so festgelegt sein, dass sie für den Ladeprozess weggeschwenkt oder hochgeschwenkt werden können. Da Luft- oder Hydraulikzylinder zum Einsatz kommen, ist der Platzbedarf gering, wobei Luftzylinder vorteilhafter Weise sich die Druckluft zu Nutze machen können, die an derartigen Niederflurwagen und auch an Tiefladern vorhanden ist.

Dort, wo keine Druckluft oder keine Hydraulik zur Verfügung steht, kann die Festlegung der Glasgestelle auch rein mechanisch erfolgen, wozu die Erfindung vorsieht, dass die Gestellfixiereinrichtungen als Doppelkeile ausgebildet sind, die in U-förmige Ausnehmungen im Ladebord und im Glasgestell einsetzbar sind bzw. zwischen beide verspannt werden können. Hier ist es natürlich auch noch denkbar, diese Doppelkeile mit Federanordnungen zu versehen, um so beim Einschwenken eine zusätzliche Verspannung zu erreichen. Da die Gestelle mit den Osila-Glastransportfahrzeugen transportiert werden, kann auch die Fixierung beispielsweise über die Osila-Glastransportfahrzeuge erleichtert werden, indem diese die Doppelkeile in ihre Spannposition ziehen. Genauso kann auch die Entlastung der Doppelkeile vorgenommen werden, sodass dann die Glasgestelle über das Osila-Glastransportfahrzeug aufzunehmen sind.

Um jeweils nur den Bereich des Daches anheben zu müssen, unter dem gerade gearbeitet wird, ist es von Vorteil, wenn das Dach des Aufbaus segmentweise anhebbar ausgebildet ist. Auf übliche Niederflurwagen können beispielsweise zwei Glastransportgestelle abgestellt werden, sodass beispielsweise jeweils nur das halbe Dach eines derartigen Niederflurwagens während des Beladens angehoben wird, während der andere in seiner Niedrigposition verbleibt.

Ein quasi automatisches Anheben des Daches wird dadurch möglich, dass es über Anlaufschrägen verfügt, die mit denen des Osila-Glastransportfahrzeuges korrespondierend ausgebildet sind. Sowohl das Osila-Glastransportfahrzeug wie auch der eigentliche Wagon bzw. dessen Dach verfügen somit über Zusatzbauteile, die quasi ein automatisches Anheben des Daches erbringen, wenn das Osila-Glastransportfahrzeug auf die Ladefläche des Transportfahrzeuges auffährt. Gesonderte Aggregate zum Anheben und Absenken des Daches werden damit überhaupt nicht mehr notwendig.

Die einzelnen Niederflurwagen oder Tieflader sollen auch im Verbund gegen die Umwelt abgeschottet sein, um eine Verschmutzung der zu transportierenden Glasscheiben zu verhindern. Aus diesem Grunde bildet die Ladefläche und der Aufbau wie weiter vorne erläutert eine abdichtende Einheit, wobei der Aufbau auch gegen die übrige Umwelt abdichtet. Aufgrund der Kurzkupplungen können die einzelnen Wagons relativ dicht aneinander verfahren werden, wobei auch der Zwischenraum zwischen den einen Fahrzeugverbund bildenden Wagons zweckmäßigerweise noch dadurch abgedichtet ist, dass die Niederflurwagen über ziehharmonikaförmige Abdeckungen miteinander verbunden sind. Dies hat den Vorteil, dass auch während des Transportes der Laderaum von einem Niederflurwagen zum anderen begangen oder sogar befahren werden kann, ohne dass eine Abschottung der einzelnen Wagen gegeneinander notwendig ist. Auch im Kurvenbereich bleibt die Abschottung gewährleistet, weil dieser Zwischenbereich ziehharmonikaförmig ausgebildet ist. Die gesamte Zugeinheit bildet somit eine durchgehende, komplette, ggf. sogar klimamäßig abzuschottende Einheit, sodass auch hochempfindliche Gläser mit derartigen Transportfahrzeugen von einem Werk zum anderen bzw. von einer Stelle zur anderen verbracht werden können.

Bezüglich eines auf der Straße verfahrbaren Tiefladers wird die Aufgabe durch die Merkmale des kennzeichnenden Teils des Anspruches 8 gelöst. Die Ladefläche wird durch die Verstärkungsbohlen so stabilisiert und verstärkt, dass die schweren und großen Glasgestelle mit den empfindlichen Glasscheiben darauf sicher abgestellt werden können, wobei diese Ladefläche auch das Gewicht der Osila-Fahrzeuge aufnimmt, sodass der Beladevorgang gesichert ist. Anschließend werden die Glasgestelle und zusätzlich die Glasscheiben so verspannt und gesichert, dass ein problemloses Verfahren des Tiefladers möglich ist.

Die Erfindung zeichnet sich insbesondere dadurch aus, dass ein Transportfahrzeug bzw. eine Art von Transportfahrzeug geschaffen ist, das vorteilhaft mit Glasgestellen beladen werden kann, ohne dass es Krananlagen oder ähnlicher Hilfseinrichtungen bedarf. Für das Laden und Entladen zum Einsatz kommen können vorteilhafterweise sogenannte Osila-Glastransportfahrzeuge, die sowieso für den innerbetrieblichen Verkehr benötigt werden und mit denen die üblichen A- oder auch L-förmigen Glasgestelle auf die entsprechend ausgebildete Ladefläche verbracht werden, wo sie über die Ladungssicherungseinrichtung und die Gestellfixiereinrichtungen so festgelegt und gesichert werden, dass auch über lange Transportwege hinweg eine Beeinträchtigung der entsprechend gelagerten Glasscheiben nicht zu befürchten ist. Aufgrund der besonderen Ausbildung der Niederflurwagen oder auch der Tieflader können diese natürlich auch für den Transport anderer großflächiger Güter zum Einsatz kommen, wobei hier wiederum der Vorteil gegeben ist, dass sowohl die Ladung wie auch die Transportgestelle bzw. Glasgestelle als solche auf der Ladefläche so fixiert und festgelegt sind, dass sie ihre einmal vorgegebene Position während des Transportes nicht verlassen können, andererseits aber so angeordnet und festgelegt sind, dass sie auch Kurvenfahrten oder auch stoßweisen Transport problemlos überstehen.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Fig. 1: zwei aneinandergekoppelte Niederflurwagen in Seitenansicht,
- Fig. 2: einen einzelnen Niederflurwagen, auf dem zwei Glasgestelle abgestellt sind in Seitenansicht,
- Fig. 3: eine Draufsicht auf einen Niederflurwagen,
- Fig. 4: eine Rückansicht eines gerade mit einem Osila-Glastransportfahrzeug beladenen Niederflurwagens und
- Fig. 5: einen Niederflurwagen in Kopfansicht, auf den ein L-förmiges Glasgestell abgestellt ist.

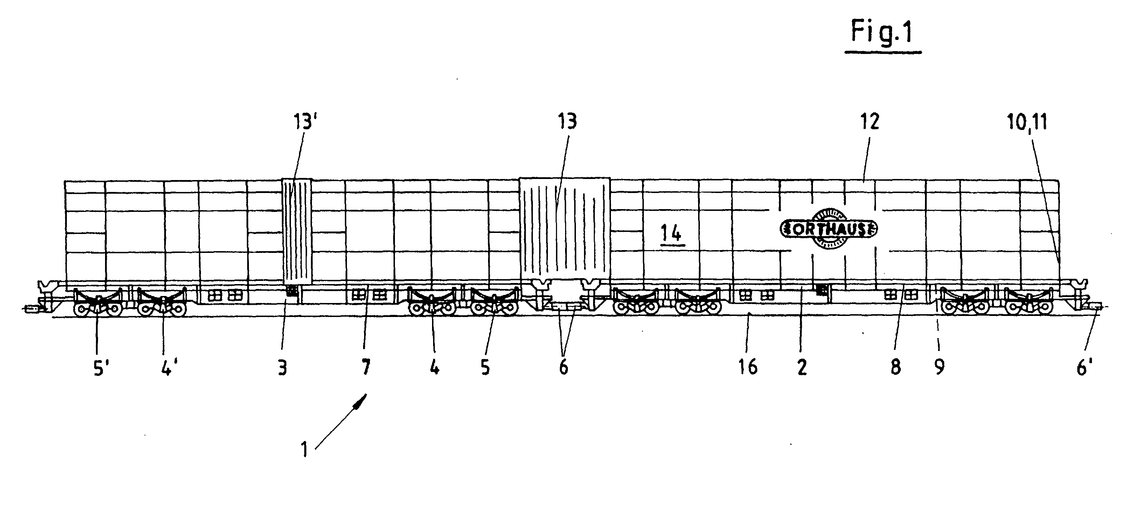

Bei dem in Figur 1 gezeigten Transportfahrzeug 1 handelt es sich um Niederflurwagen 2, 3, die über entsprechende Lenkgestelle 4, 5 verfügen und die über eine Kurzkupplung 6 so miteinander verbunden sind, dass ihre Ladeflächen 7 quasi durchgehend befahren bzw. beladen werden können. Zwischen die Ladeflächen 7 werden dann einfach entsprechende Platten bzw. Laderampen gelegt, sodass eine durchgehende Befahrung über geeignete Transporteinrichtungen möglich wird.

Seitlich der Ladefläche 7 sind Ladebords 8 vorgesehen, wie aus den nachfolgenden Figuren entnommen werden kann. Diese Ladebords 8, 9 sind durch Seitenwände 10, 11 ergänzt, wobei diese oben über ein Dach 12 so verbunden sind, dass sich ein insgesamt stabilisierter Aufbau 14 ergibt. Dieser Aufbau 14 wird zwischen den Ladeflächen 7 und den Seitenwänden 10, 11 und auch dem Dach 12 durch eine ziehharmonikaartige Abdeckung 13 ergänzt um auch diesen Zwischenraum entsprechend zu sichern und "abzudichten". Soweit der einzelne Niederflurwagen 3 auch noch in unterschiedliche Abteile 17, 18 unterteilt ist, kann auch hier eine ziehharmonikaförmige Abdeckung 13 zweckmäßig sein, um so eine vollständige Abdichtung des Innenraums zu gewährleisten. Dabei sollte auch der Zwischenraumbereich oberhalb der Schienen 16 mit abgeschottet sein, um so eine Verschmutzung der mittransportierten Glasgestelle zu vermeiden.

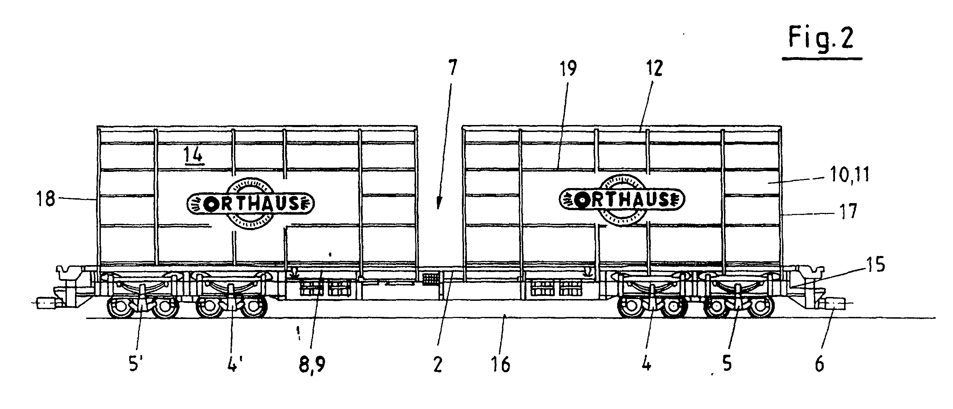

Figur 2 zeigt einen Niederflurwagen 2 in Seitenansicht, wobei deutlich wird, dass hier der Niederflurwagen 2 in zwei Abteile 17, 18 unterteilt ist, die beide mit entsprechenden Glasgestellen beschickt sind, die aufgrund der Verkleidung hier nicht erkennbar sind. Außen auf der Verkleidung 19 sind Beschriftungen erkennbar, wobei diese Flächen auch zur Werbung ausgenutzt werden können.

Der einzelne Niederflurwagen 2 verfügt hier über je zwei Lenkgestelle 4, 5, 4', 5'. Dadurch kann er bei großer Länge problemlos auch einem engen Schienenradius folgen, wobei hier die Schiene 16 nur angedeutet ist.

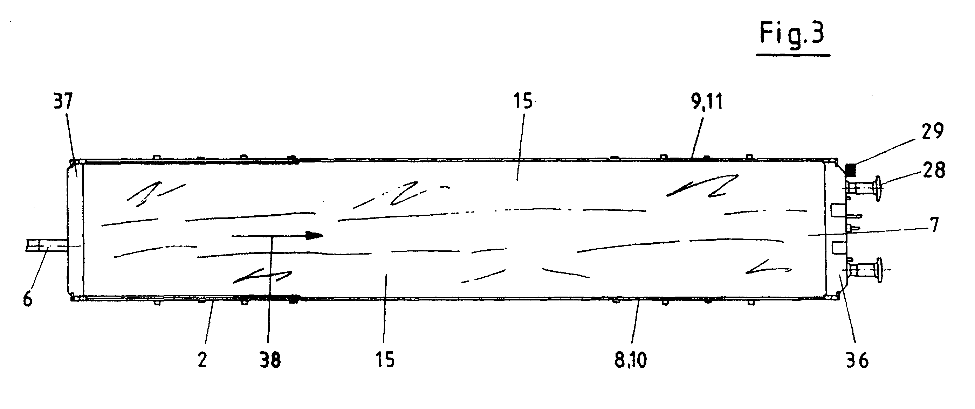

Figur 3 zeigt eine Draufsicht auf einen Niederflurwagen 2, wobei dieser mit Kurzkupplungen 6 ausgerüstet ist; die üblichen Puffer 28 sind zumindest dort vorgesehen, wo eine Ankopplung an ein Zugfahrzeug erforderlich wird. Ansonsten reichen die gezeigten Kurzkupplungen 6. Aus Figur 3 erkennbar ist außerdem ein Auftritt 29, wie er aber bei derartigen Niederflurwagen 2 üblich ist.

Interessant ist die große Ladefläche 7, auf der die Fahrbahn 15 erkennbar ist, die sowohl zum Befahren der hier nicht wiedergegebenen Osila-Glastransportfahrzeuge dient, wie auch zum Abstellen der ebenfalls nicht dargestellten Glasgestelle. Seitlich ist diese Ladefläche 7 durch die Ladebords 8, 9 begrenzt, während kopfseitig Abschnitte 36, 37 vorhanden sind, auf die die hier nicht dargestellten Laderampen aufgelegt werden können, um so die Ladefläche 7 für die besagten Osila-Glastransportfahrzeuge leicht erreichbar und befahrbar zu machen. Insbesondere können so auch die Zwischenräume zwischen den einzelnen Niederflurwagen 2, 3 befahren werden, sodass von einer einzigen Beladestelle aus die hintereinander angeordneten Niederflurwagen 2, 3 zu beschicken sind. Dabei erfolgt die Beladung in Längsrichtung 38, ohne dass es erforderlich wird, dass von seitlich angeordneten Verladebühnen oder Ladekränen aus die Lasten auf die Ladefläche 7 herübergeschwenkt werden.

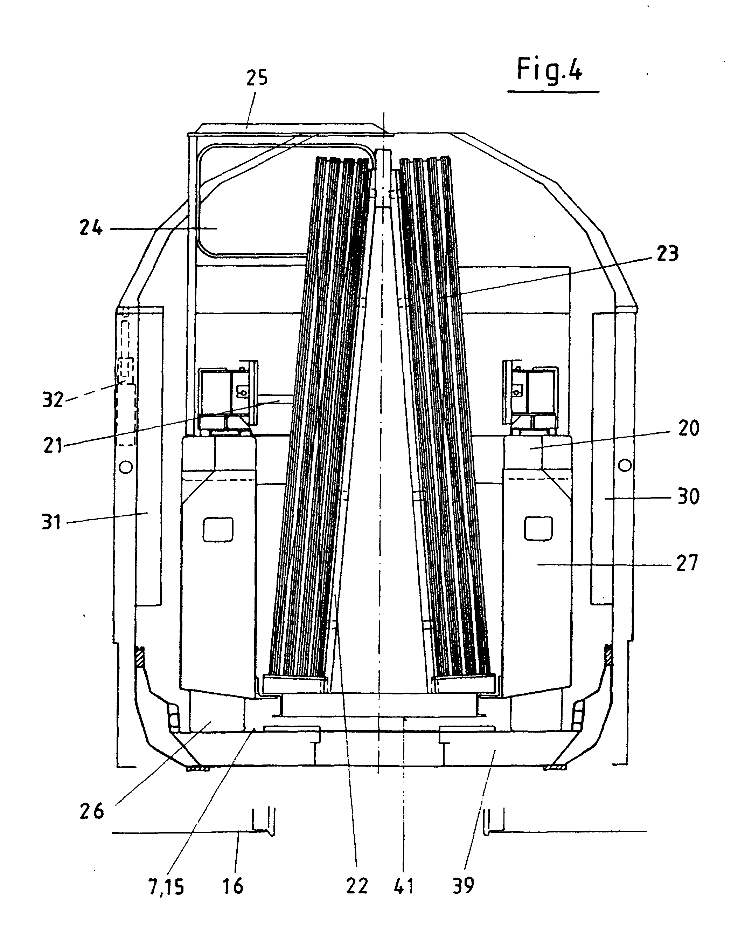

Figur 4 gibt eine Ladesituation wieder, bei der ein Osila-Glastransportfahrzeug 20 in Längsrichtung 38 auf die Ladefläche 7 aufgefahren ist. Auf der Ladefläche 7 ist die Fahrbahn 15 für das Osila-Glastransportfahrzeug 20 vorgegeben, wobei die auf dem Glasgestell 22 abgestellten Glaspakete 23 während des Befahrens über die Fixiereinrichtungen 21 so gehalten sind, dass sie nicht verrutschen können.

Erkennbar ist, dass das gesamte Glasgestell 22 mit dem darauf lagernden Glaspaketen 23 von dem Osila-Glastransportfahrzeug 20 im angehobenen Zustand über die Fahrbahn 15 auf die Ladefläche 7 transportiert wird, um dann auf der Ladefläche 7 abgesetzt zu werden.

Erkennbar ist außerdem, dass das Osila-Glastransportfahrzeug 20 über ein hochstehendes Führerhaus 24 verfügt, an dessen Schutzdach 25 Anlaufschrägen und Führungen vorgesehen sein können, über die das Dach 12 des Niederflurwagens 2 beim Befahren gleichzeitig soweit angehoben wird, dass das Dach 12 für das Osila-Glastransportfahrzeug 20 kein Hindernis darstellt. Das Osila-Glastransportfahrzeug 20 ist mit Laufrädern 26 versehen, die einen gleitenden Transport auf der Fahrbahn 15 sicherstellen. Außerdem kann der Senkrahmen 27 gegenüber den Laufrädern 26 soweit abgesenkt werden, dass das Glasgestell 22, das hier als A-förmiges Glasgestell ausgebildet ist, mit seiner Bodenfläche 41 auf die Ladefläche 7 abgesenkt werden kann. Beim Weiterfahren des Osila-Glastransportfahrzeuges 20 in Längsrichtung 38 wird dieses dann vom Glasgestell 22 frei, kann wieder angehoben werden und dann zum Transport weiterer Glasgestelle in die Glashütte oder zum Kunden gefahren werden.

Weiter vorne ist erläutert worden, dass das Dach 12 über das Führerhaus 24 bzw. das Schutzdach 25 angehoben werden kann. Außer dieser Hebevorrichtung ist es auch möglich mit Hilfe der Hubeinrichtung 32, die in beiden Seitenwänden 10, 11 angeordnet ist, das Dach 12 anzuheben und auch abzusenken.

Seitlich an den Seitenwänden 10, 11 ist außerdem eine Ladungssicherungseinrichtung 30, 31 wiedergegeben, wobei über diese Ladungssicherungseinrichtung 30, 31 die Glaspakete 23 ähnlich wie während des Transportes mit dem Osila-Glastransportfahrzeug 20 fixiert werden können.

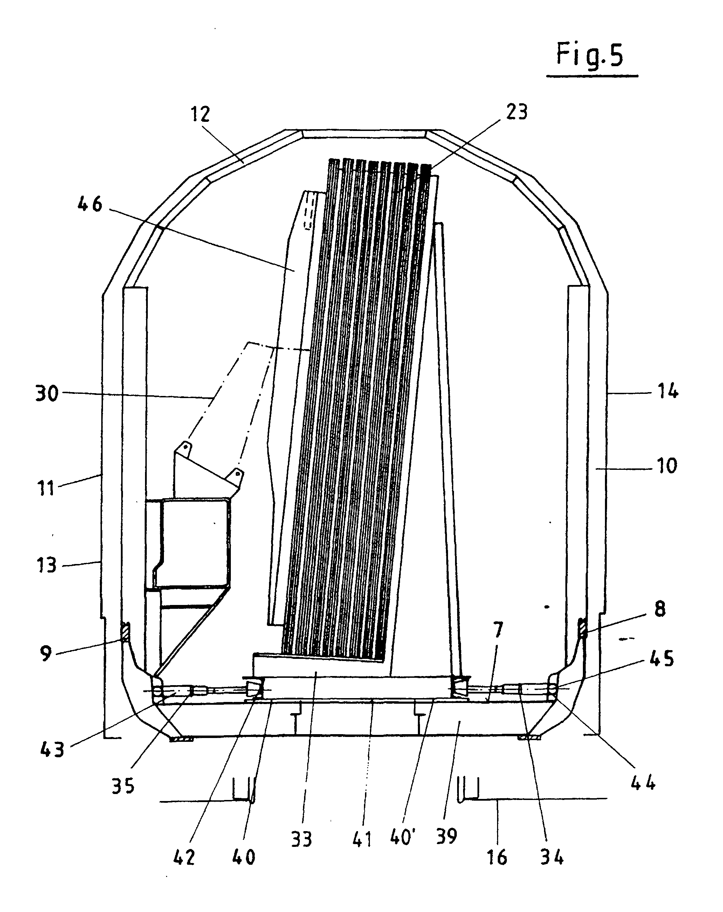

Abweichend von Figur 4 zeigt Figur 5 ein L-förmiges Glasgestell 33, das mit einem entsprechend größeren Glaspaket 23 beladen ist. Auch dieses L-förmige Glasgestell 33 hat U-förmige Längsträger 42, in die die entsprechend ausgebildeten U-förmigen Längsträger des Osila-Glastransportfahrzeuges 20 eingreifen können, wie dies auch in Figur 4 verdeutlicht ist. Diese U-förmigen Längsträger 42 dienen nach Figur 5 aber gleichzeitig dazu, Gestellfixierungen 34, 35 aufzunehmen, die nach dem Absetzen des L-förmigen Glasgestells 33 oder des Glasgestells 22 für eine Festlegung dieser Glasgestelle 22, 33 sorgen. Nach Figur 5 sind dafür Luftzylinder 43, 44 vorgesehen, die einmal in U-förmige Längsträger 42 im verspannten Zustand eingreifen und andererseits sich an U-förmigen Ausnehmungen 44 im Ladebord 8, 9 eingreifen. Hier kann nach Figur 5 auch ein Gelenk 45 vorgesehen sein, um diese Luftzylinder 43 hochzuschwenken, wenn die Osila-Glastransportfahrzeuge 20 zum Be- und Entladen zum Einsatz kommen.

Statt der Luftzylinder oder Hydraulikzylinder 43 können auch andere Spreizen verwendet werden, die mit den Ladungssicherungseinrichtungen 30, 31 zusammenarbeiten.

Nach Figur 5 ist eine aufwendiger bauende Ladungssicherungseinrichtung 30 vorgesehen, die über eine verschwenkbare Fixierpatsche 46 verfügt und die mehr oder weniger unabhängig von den Seitenwänden 10, 11 arbeitet. Sie stützt sich mehr an dem Ladebord 8, 9 ab, sodass der übrige Aufbau 14 weniger stabil sein muss. Um die enorme Last insbesondere auch der L-förmigen Glasgestelle 33 aufnehmen zu können, sind in Längsrichtung 38 über den Querträger 39 verlaufende Verstärkungsbohlen 40, 40' vorgesehen. Diese Verstärkungsbohlen 40 sorgen für eine optimal gleichmäßige Verteilung der Auflast des Glaspaketes 23.

Zur Sicherung der Glaspakete 23 können neben der Ausführung nach Figur 5 auch andere Ausführungen von Ladungssicherungseinrichtungen 30, 31 zum Einsatz kommen. Wichtig ist dabei, dass das Glaspaket 23 während des Verfahrens des Niederflurwagens 2 bzw. 3 so gehalten ist, dass die Glasscheiben nicht beschädigt werden. Vereinfachend ist in Figur 5 nur eine Ladungssicherungseinrichtung 30 wiedergegeben. Auf der gegenüberliegenden Seite muss eine ähnlich ausgebildete Abstützung vorhanden sein, da ansonsten ein Kippen des gesamten L-förmigen Glasgestells 33 nicht zu verhindern wäre.

## Patentansprüche

1. Transportfahrzeug (1) für den Schienenweg in Form eines Niederflurwagens (2, 39) für den Transport von schweren und große Abmessungen aufweisenden Gegenständen wie Glasgestellen, mit einer dem Schienenmaß angepassten, breiten und durch den Einsatz von im Abstand zueinander angeordneten, niedrig bauenden Lenkgestellen (4, 5) auch langen Ladefläche (7), die an beiden Längsseiten durch ein Ladebord (8, 9) begrenzt und kopfseitig mit einer Laderampe verbindbar ausgebildet ist, wobei die Ladefläche (7) gegen Verschmutzung von unten und rundum zusammen mit einem Aufbau (14) abgedichtet ist und ein Dach (12) aufweist, das das Beladen erleichternd in seiner Lage veränderbar ist,
**dadurch gekennzeichnet,**
**dass** die Ladefläche (7) eine Kurzkupplung mit anderen Niederflurwagen ermöglichend ausgebildet ist und in Längsrichtung (38) verlaufende und auf Querträgern (39) ruhende Verstärkungsbohlen (40) aufweist, die die Bodenfläche (41) der große Abmessungen aufweisenden Gegenstände abstützend angeordnet sind, dass der sich auf die Ladefläche (7) abstützende Aufbau (14) mit einem anhebbar ausgebildeten Dach (12) und stabilisierten Seitenwänden (10, 11) ausgerüstet ist, die mit der Ladefläche (7) als Widerlager für Ladungssicherungseinrichtungen (30, 31) dienend ausgebildet sind und dass im Bereich der Ladefläche (7) Gestellfixiereinrichtungen (34, 35) vorgesehen sind.

2. Transportfahrzeug nach Anspruch 1,
**dadurch gekennzeichnet,**
**dass** die Seitenwände (10, 11), das Dach (12) und die Ladefläche (7) bezüglich des notwendigen Widerlagers für die Ladungssicherungseinrichtungen (30, 31) eine Einheit bildend miteinander gekoppelt sind.

3. Transportfahrzeug nach einem der vorhergehenden Ansprüche,
**dadurch gekennzeichnet,**
**dass** die Gestellfixierungen (34, 35) als am unteren Ladebord (8, 9) schwenkbar angeordneter Luft- oder Hydraulikzylinder (43) ausgebildet sind, der an einem U-förmigenLängsträger (42) des Glasgestells (22, 33) abstützbar ausgeführt ist.

4. Transportfahrzeug nach einem der vorhergehenden Ansprüche,
**dadurch gekennzeichnet,**
**dass** die Gestellfixiereinrichtungen (34, 35) als Doppelkeile ausgebildet sind, die in U-förmige Ausnehmungen (44) im Ladebord (8, 9) und im Glasgestell (22, 33) einsetzbar bzw. zwischen beide verspannbar sind.

5. Transportfahrzeug nach einem der vorhergehenden Ansprüche,
**dadurch gekennzeichnet,**
**dass** das Dach (12) des Aufbaus (14) segmentweise anhebbar ausgebildet ist.

6. Transportfahrzeug nach einem der vorhergehenden Ansprüche,
**dadurch gekennzeichnet,**
**dass** das Dach (12) über Anlaufschrägen und Führungen verfügt.

7. Fahrzeugverbund, bestehend aus mindestens zwei aneinandergekoppelte Niederflurwagen (2, 3) nach einem der vorhergehenden Ansprüche,
**dadurch gekennzeichnet,**
**dass** die Niederflurwagen (2, 3) über ziehharmonikaförmige Abdeckungen (13) miteinander verbunden sind.

8. Transportfahrzeug (1) in Form eines Tiefladers für den Transport von schweren und große Abmessungen aufweisenden Gegenstänen wie Glasgestellen mit einer breiten und durch den Einsatz von im Abstand angeordneten, niedrig bauenden Radsätzen (4', 5') auch langen Ladefläche (7), die an beiden Längsseiten durch ein Ladebord (8, 9) begrenzt und heckseitig mit einer Laderampe verbindbar ausgebildet ist, wobei die Ladefläche (7) gegen Verschmutzung rundum zusammen mit einem Aufbau (14) abgedichtet ist und ein Dach (12) aufweist,
**dadurch gekennzeichnet,**
**dass** die Ladefläche (7) in Längsrichtung (38) verlaufende und auf Querträgern (39) ruhende Verstärkungsbohlen (40) aufweist, die die Bodenfläche (41) der große Abmessungen aufweisenden Gegenstände abstützend angeordnet sind, dass der sich auf die Ladefläche (7) abstützende Aufbau (14) mit einem abhebbar ausgebildeten Dach (12) und stabilisierten Seitenwänden (10, 11) ausgerüstet ist, die mit der Ladefäche (7) als Widerlager für Ladesicherungseinrichtungen (30, 31) dienend ausgebildet sind und dass im Bereich der Ladefläche (7) Gestellfixiereinrichtungen (34, 35) vorgesehen sind.

## Claims

1. Transportation vehicle (1) for a railway track in the form of a low-platform wagon (2, 39) for transporting heavy and large articles such as glass frames, comprising a wide and, owing to the use of low-level pony trucks (4, 5) arranged at a distance from one another, also long loading area (7) adapted to the track size, the loading area (7) being limited at both longitudinal sides by a loading rim (8, 9) and being constructed so as to be connectable at its top end to a loading ramp, the loading area (7) being sealed against soiling from below and all round by a structure (14) and comprising a roof (12), of which the position can be changed to facilitate loading, **characterised in that** the loading area (7) is constructed so as to allow a tight coupling to other low-platform wagons and comprises reinforcing planks (40) extending in the longitudinal direction (38) and resting on transverse beams (39), the planks (40) being arranged so as to support the base area (41) of the large articles, **in that** the structure (14) supported on the loading area (7) is equipped with a raisable roof (12) and stabilised side walls (10, 11) which are constructed with the loading area (7) to be used as abutments for load securing devices (30, 31), and **in that** frame fixing devices (34, 35) are provided in the region of the loading area (7).

2. Transportation vehicle according to claim 1, **characterised in that** the side walls (10, 11), the roof (12) and the loading area (7) are coupled to one another to form a unit, with respect to the required abutment for the load securing devices (30, 31).

3. Transportation vehicle according to any of the preceding claims, **characterised in that** the frame fixings (34, 35) are constructed as an air or hydraulic cylinder (43) pivotally arranged on the lower loading rim (8, 9) and designed so it can be supported on a U-shaped longitudinal carrier (42) of the glass frame (22, 33).

4. Transportation vehicle according to any of the preceding claims, **characterised in that** the frame fixing devices (34, 35) are constructed as double wedges which can be inserted into U-shaped recesses (44) in the loading rim (8, 9) and in the glass frame (22, 33) or can be fixed between these two.

5. Transportation vehicle according to any of the preceding claims, **characterised in that** the roof (12) of the structure (14) is constructed so it can be raised in segments.

6. Transportation vehicle according to any of the preceding claims, **characterised in that** the roof (12) has lead-in bevels and guides.

7. Vehicle composite structure consisting of at least two low-platform wagons (2, 3) coupled to one another according to any of the preceding claims, **characterised in that** the low-platform wagons (2, 3) are connected to one another via concertinaed coverings (13).

8. Transportation vehicle (1) in the form of a low loader for transporting heavy and large articles such as glass frames, comprising a wide and, owing to the use of low-level wheel sets (4', 5') arranged at a distance, also long loading area (7) which is limited at both longitudinal sides by a loading rim (8, 9) and is constructed so as to be connectable at the rear to a loading ramp, the loading area (7) being sealed against soiling all round by a structure (14) and comprising a roof (12), **characterised in that** the loading area (7) comprises reinforcing planks (40) extending in the longitudinal direction (39) and resting on transverse beams (39), the planks (40) being arranged so as to support the base area (41) of the large articles, **in that** the structure (14) supported on the loading area (7) is equipped with a raisable roof (12) and stabilised side walls (10, 11) which are constructed with the loading area (7) to be used as abutments for load securing devices (30, 31), and **in that** frame fixing devices (34, 35) are provided in the region of the loading area (7).

## Revendications

1. Véhicule de transport (1) à usage ferroviaire, sous la forme d'un wagon (2, 3) à plate-forme surbaissée pour le transport d'objets lourds et de grandes dimensions tels que des supports pour verre, avec une plate-forme de chargement (7) large, adaptée aux dimensions des voies, et également longue par l'utilisation de bogies surbaissés (4, 5) disposés à distance entre eux, qui est délimitée par une bordure de chargement (8, 9) sur les deux côtés longitudinaux et qui est conçue pour pouvoir être reliée du côté de tête à une rampe de chargement, la plate-forme de chargement (7) étant protégée de l'encrassement par le dessous et tout autour conjointement avec une caisse (14) et présentant un toit (12) dont la position est modifiable afin de faciliter le chargement,
**caractérisé en ce que** la plate-forme de chargement (7) est conçue pour permettre un attelage court avec d'autres wagons à plate-forme surbaissée et présente des lambourdes de renforcement (40) s'étendant en direction longitudinale (38) et reposant sur des traverses (39), lambourdes qui sont disposées de façon à soutenir la surface de fond (41) des objets de grandes dimensions, **en ce que** la caisse (14) qui s'appuie sur la plate-forme de chargement (7) est équipée d'un toit (12) conçu relevable et de parois latérales stabilisatrices (10, 11), qui sont conçues pour servir avec la plate-forme de chargement (7) de contre-appui pour des moyens (30, 31) d'assujettissement du chargement, et **en ce que** des moyens (34, 35) d'immobilisation des supports sont prévus dans la région de la plate-forme de chargement (7).

2. Véhicule de transport selon la revendication 1, **caractérisé en ce que** les parois latérales (10, 11), le toit (12) et la plate-forme de chargement (7) sont mutuellement accouplés en formant un ensemble quant au contre-appui nécessaire pour les moyens (30, 31) d'assujettissement du chargement.

3. Véhicule de transport selon l'une quelconque des revendications précédentes, **caractérisé en ce que** les moyens (34, 35) d'immobilisation des supports sont réalisés sous la forme de vérins pneumatiques ou hydrauliques (43) disposés à pivotement sur la bordure de chargement inférieure (8, 9), vérins qui peuvent s'appuyer contre un longeron (42) en forme de U du support pour verre (22, 33).

4. Véhicule de transport selon l'une quelconque des revendications précédentes, **caractérisé en ce que** les moyens (34, 35) d'immobilisation des supports sont réalisés sous la forme de cales doubles qui peuvent être insérées dans des évidements (44) en forme de U dans la bordure de chargement (8, 9) et dans le support de verre (22, 33), ou encore qui peuvent être bloquées entre ces éléments.

5. Véhicule de transport selon l'une quelconque des revendications précédentes, **caractérisé en ce que** le toit (12) de la caisse (14) est conçu relevable par segments.

6. Véhicule de transport selon l'une quelconque des revendications précédentes, **caractérisé en ce que** le toit (12) dispose de biais d'attaque et de coulisses.

7. Composition de véhicules constituée d'au moins deux wagons (2, 3) à plate-forme surbaissée attelés entre eux selon l'une quelconque des revendications précédentes, **caractérisée en ce que** les wagons (2, 3) à plate-forme surbaissée sont mutuellement assemblés par l'intermédiaire de soufflets en accordéon (13).

8. Véhicule de transport (1) sous la forme d'une semi-remorque à plate-forme surbaissée pour le transport d'objets lourds et de grandes dimensions tels que des supports pour verre, avec une plate-forme de chargement (7) large, et également longue par l'utilisation d'essieux surbaissés (4', 5') disposés à distance, qui est délimitée par une bordure de chargement (8, 9) sur les deux côtés longitudinaux et qui est conçue pour pouvoir être assemblée du côté arrière à une rampe de chargement, la plate-forme de chargement (7) étant protégée de l'encrassement tout autour conjointement avec une caisse (14) et présentant un toit (12),
**caractérisé en ce que** la plate-forme de chargement (7) présente des lambourdes de renforcement (40) s'étendant en direction longitudinale (38) et reposant sur des traverses (39), lambourdes qui sont disposées de façon à soutenir la surface de fond (41) des objets de grandes dimensions, **en ce que** la caisse (14) qui s'appuie sur la plate-forme de chargement (7) est équipée d'un toit (12) pouvant être soulevé et de parois latérales stabilisatrices (10, 11), qui sont conçues pour servir avec la plate-forme de chargement (7) de contre-appui pour des moyens (30, 31) d'assujettissement du chargement, et **en ce que** des moyens (34, 35) d'immobilisation des supports sont prévus dans la région de la plate-forme de chargement (7).
